# EUROPÄISCHE PATENTSCHRIFT

(11) **EP 2 435 263 B1**
(45) Veröffentlichungstag und Bekanntmachung des Hinweises auf die Patenterteilung: **12.06.2013**
(21) Anmeldenummer: 10711582.6
(22) Anmeldetag: 27.03.2010
(51) Int. Cl.: B60G 3/20, B60G 3/26, B60G 7/00

(54) **FAHRZEUG-EINZELRADAUFHÄNGUNG**
INDEPENDENT VEHICLE SUSPENSION
SUSPENSION DE ROUE INDIVIDUELLE POUR VÉHICULE

(30) Priorität: 27.05.2009 DE 102009022883
(43) Veröffentlichungstag der Anmeldung: 04.04.2012
(73) Patentinhaber: Bayerische Motoren Werke Aktiengesellschaft, 80809 München (DE)
(72) Erfinder: JAKOB, Benjamin, 80807 Munchen (DE)
(86) Internationale Anmeldenummer: PCT/EP2010/001946
(87) Internationale Veröffentlichungsnummer: WO 2010/136094

(56) Entgegenhaltungen:
- EP-A2- 0 899 133
- DE-A1- 1 430 793
- GB-A- 2 256 401
- US-A1- 2004 046 349

## Beschreibung

Die Erfindung betrifft eine Fahrzeug-Einzelradaufhängung insbesondere für ein Hinterrad eines Personenkraftwagens, mit einem Radträger, mit dem ein sich im wesentlichen in Fahrzeug-Längsrichtung erstreckender Längslenker, dessen freies Ende über ein Längslenkerlager, welches unter Einwirkung von Seitenkräften auf das Rad eine Spuränderung, erlaubt, letztlich am Fahrzeug-Aufbau angelenkt ist, fest verbunden ist, sowie mit zwei sich vorrangig in Fahrzeug-Querrichtung erstreckenden Lenkern, die gelenkig einerseits mit dem Radträger oder Längslenker und andererseits direkt oder indirekt mit dem Fahrzeug-Aufbau verbunden sind. Zum Stand der Technik wird auf die EP 0 899 133 A2 verwiesen.

In der genannten Schrift ist eine in der Fachwelt auch sog. Zentrallenkerachse beschrieben, die sich insbesondere bei angetriebenen Rädern durch ein günstiges kinematisches Verhalten auszeichnet und dabei vorteilhafter ist als die weiterhin bekannten sog. Schräglenkerachsen. Allerdings ist der Bauraumbedarf einer Zentrallenkerachse bzw. einer Fahrzeug-Einzelradaufhängung nach dem Oberbegriff des Anspruchs 1 größer als derjenige einer Schräglenkerachse, weshalb hiermit eine Maßnahme zur Verringerung des Bauraumbedarfs bei Beibehaltung der kinematischen und elastokinematischen Eigenschaften bzw. Vorteile einer Einzelradaufhängung nach dem Oberbegriff des Anspruchs 1 aufgezeigt werden soll (= Aufgabe der vorliegenden Erfindung).

Die Lösung dieser Aufgabe ist dadurch gekennzeichnet, dass einer der sich vorrangig in Fahrzeug-Querrichtung erstreckenden Lenker als Querlenker fungiert und auch teilweise in Fahrtrichtung ausgerichtet nahe des Rades am Radträger oder Längslenker angelenkt ist und zwischen seinen beiden Enden eine Lagerung für den anderen vorrangig in Fahrzeug-Querrichtung ausgerichteten und als sog. Sturzhebel-Lenker fungierenden Lenker aufweist, der den Querlenker in Draufsicht, d.h. in Vertikalrichtung betrachtet kreuzt, wobei diese genannte Lagerung eine Kippbewegung des Sturzhebel-Lenkers um eine sich im wesentlichen horizontal und im wesentlichen in Fahrtrichtung erstreckende Kippachse ermöglicht und der Sturzhebel-Lenker an seinen beiden Enden über eine in Vertikalrichtung steife und in der Horizontalebene weiche Abstützung einerseits in Querrichtung betrachtet weiter als der Querlenker vom Rad beabstandet am Längslenker und andererseits am Fahrzeug-Aufbau abgestützt ist, wobei der fahrzeugaufbau-seitige Lagerpunkt des Sturzhebel-Lenkers in Draufsicht von der durch die fahrzeugaufbau-seitigen Lagerpunkte des Längslenkers und des Querlenkers beschriebenen Schwenkachse beabstandet ist. Vorzugsweise kreuzt dabei der sog. Sturzhebel-Lenker den Querlenker durch geeignete Gestaltung zumindest eines dieser beiden Lenker physisch; weitere vorteilhafte Ausbildungen sind Inhalt der weiteren Unteransprüche.

Das wesentliche Merkmal der vorliegenden Erfindung besteht darin, dass sich die beiden vorrangig in Fzg.-Querrichtung erstreckenden Lenker in Draufsicht kreuzen und im Bereich dieses Kreuzungspunktes aneinander derart gelagert sind, dass die beschriebene Kippbewegung des Sturzhebel-Lenkers um die besagte Kippachse erfolgen kann. Das Kreuzen dieser beiden Lenker, d.h. des Querlenkers und des Kipphebel-Lenkers bedeutet, dass sich in Draufsicht die beiden Geraden, welche von diesen beiden Lenkern jeweils durch geradlinige Verbindung der beiden Mittelpunkte der beiden Lager am Ende jedes dieser Lenker beschrieben werden, schneiden.

Dabei ist quasi in diesem Schnittpunkt der besagten Geraden der eine der beiden Lenker zumindest geringfügig schwenkbar oder kippbar am anderen dieser beiden Lenker gelagert, und zwar in einer sog. Lagerung, die eine sog. Kippachse bildet, um welche diese Schwenkbewegung oder Kippbewegung des einen Lenkers gegenüber dem anderen Lenker erfolgen kann, wobei sich diese Kippachse im wesentlichen horizontal und im wesentlichen in Fahrtrichtung erstreckt. Dieses letztgenannte Merkmal ermöglicht es in Verbindung mit den weiteren Merkmalen des unabhängigen Patentanspruchs, das gewünschte kinematische und elastokinematische Verhalten der Einzelradaufhängung zu erzielen. Hierauf wird an späterer Stelle, nämlich in Verbindung mit der Beschreibung eines Ausführungsbeispiels der vorliegenden Erfindung näher eingegangen.

In einer bevorzugten Ausführungsform liegt der besagte Kreuzungspunkt des Querlenkers und des sog. Kipphebel-Lenkers im wesentlichen innerhalb der körperlichen Strukturen dieser beiden Lenker, was bedeutet, dass sich diese beiden Lenker physisch, d.h. körperlich kreuzen. Hiermit stellt sich ein signifikanter Vorteil ein, nämlich ein gegenüber dem Stand der Technik erzielbarer Bauraumgewinn, der sich durch die sog. "physisch kreuzende" Anordnung dieser beiden Lenker ergibt. Hiermit ist es nämlich möglich, diese beiden Lenker im wesentlichen in einer gleichen Horizontalebene, d.h. im wesentlichen gleich weit von der Fahrbahn beabstandet anzuordnen. Wenn diese im wesentlichen gemeinsame Horizontalebene der beiden Lenker in Vertikalrichtung betrachtet nicht oberhalb des Radmittelpunktes vorgesehen wird, so steht in Fahrzeugquerrichtung betrachtet oberhalb des Radmittelpunktes freier Bauraum zur Verfügung, der beispielsweise zur Ausformung eines Kofferraums des Fahrzeugs bzw. Personenkraftwagens genutzt werden kann. Im übrigen kann mit einer solchen "physisch kreuzenden" Anordnung der beiden Lenker jeder dieser Lenker bei relativ geringem Bauraumbedarf in sich bestmöglich steif, insbesondere biegesteif ausgebildet werden, und zwar jeweils nach Art eines sog. Biegebalkens.

Was die konkrete Ausgestaltung einer solchen "physisch kreuzenden" Anordnung der beiden genannten Lenker betrifft, so kann hierfür einer dieser Lenker in einem zwischen seinen beiden Enden liegenden Abschnitt eine Durchbrechung aufweisen, durch welche der andere dieser Lenker hindurchgeführt ist. Alternativ ist oder sind jedoch auch (eine) geeignet gestaltete Aussparung(en) in einem oder in beiden Lenkern möglich, die es erlaubt bzw. erlauben, diese beiden Lenker in sich physisch kreuzender Weise anzuordnen. Dabei sei ausdrücklich erwähnt, dass der sog. Kreuzungswinkel, unter dem sich die beiden Lenker physisch kreuzen, vorzugsweise ein spitzer Winkel ist, nachdem es sich jeweils um vorrangig in Fzg.-Querrichtung ausgerichtete Lenker handelt. Im Bereich bzw. in der direkten Umgebung des genannten Kreuzungspunktes dieser beiden Lenker bzw. im Bereich der genannten Durchbrechung oder Aussparung(en) ist dann die genannte Lagerung vorgesehen, über welche diese beiden Lenker um die genannte Kippachse relativ zueinander kippbar aneinander abgestützt sind.

Im unabhängigen Patentanspruch sind den beiden sich vorrangig in Fzg.-Querrichtung erstreckenden Lenkern bestimmte Funktionen zugeordnet, wonach es sich bei einem dieser Lenker um einen Querlenker handelt, über den vorrangig die vom Rad gegenüber der Fahrbahn abzustützenden Seitenkräfte übertragen werden. Der andere Lenker hingegen fungiert als sog. Sturzhebel und soll somit für den richtigen Rad-Sturz sorgen. Insbesondere sorgt dieser in spezieller Weise angeordnete Sturzhebel-Lenker dafür, dass das Rad bei Einfederbewegungen des Radträgers gegenüber dem Fahrzeugaufbau keine zu großen Änderungen hinsichtlich Rad-Sturz erfährt. Im übrigen kann hiermit auch die Neigung sowie die Linearität der sog. (und dem Fachmann bekannten) Spurkurve in gewünschter Weise beeinflusst werden.

Im Hinblick auf diese genannten Funktionen sind auch die Lagerstellen bzw. Abstützungen dieser sich vorrangig in Fzg.-Querrichtung erstreckenden Lenker unterschiedlich ausgebildet. Die rad-seitige sowie die fahrzeugaufbau-seitige Lagerstelle des Querlenkers ist wie üblich, nämlich in den wesentlichen Richtungen relativ steif ausgeführt, um eine gute Radführung zu erzielen. Die Abstützung des sog. Sturzhebel-Lenkers hingegen ist sowohl rad-seitig als auch fahrzeugaufbau-seitig nur in Vertikalrichtung steif ausgeführt, in den Horizontalrichtungen hingegen möglichst weich. Hiermit ist es möglich, das gewünschte kinematische und elastokinematische Verhalten der Einzelradaufhängung zu erzielen, worauf an späterer Stelle, nämlich in Verbindung mit der Beschreibung eines Ausführungsbeispiels der vorliegenden Erfindung näher eingegangen wird. Vorzugsweise ist dabei zumindest die in Vertikalrichtung steife und in der Horizontalebene weiche Abstützung des Sturzhebel-Lenkers gegenüber dem Fahrzeugaufbau in Form einer Pendelstütze ausgeführt, was es in vorteilhafter Weise ermöglicht, diesen Sturzhebel-Lenker in einem anderen Abstand zur Fahrbahn und somit in anderer Höhe über der Fahrbahn mit dem Aufbau zu verbinden als den Querlenker. Im übrigen sei noch erwähnt, dass die Lagerstelle des Längslenkers wie von der Zentrallenkerachse her bereits bekannt gestaltet ist, nämlich derart, dass das Rad unter Seitenkraft in Vorspur gehen kann.

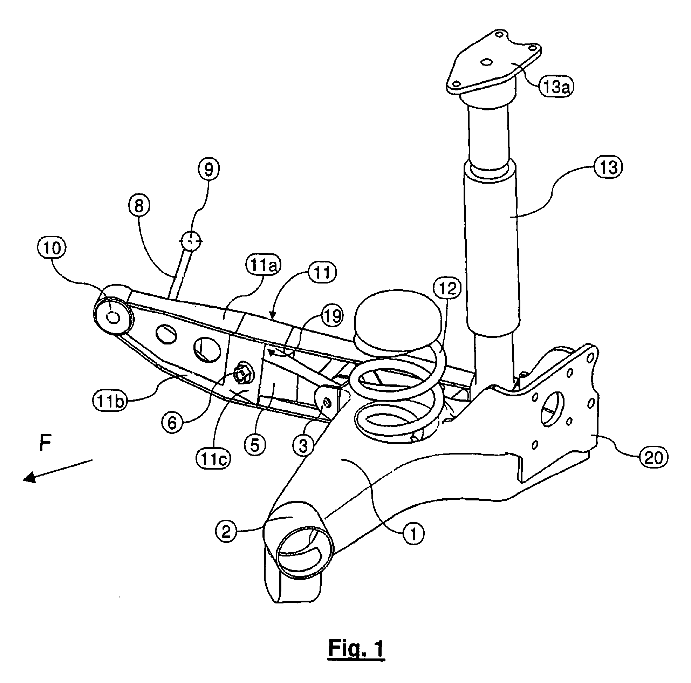

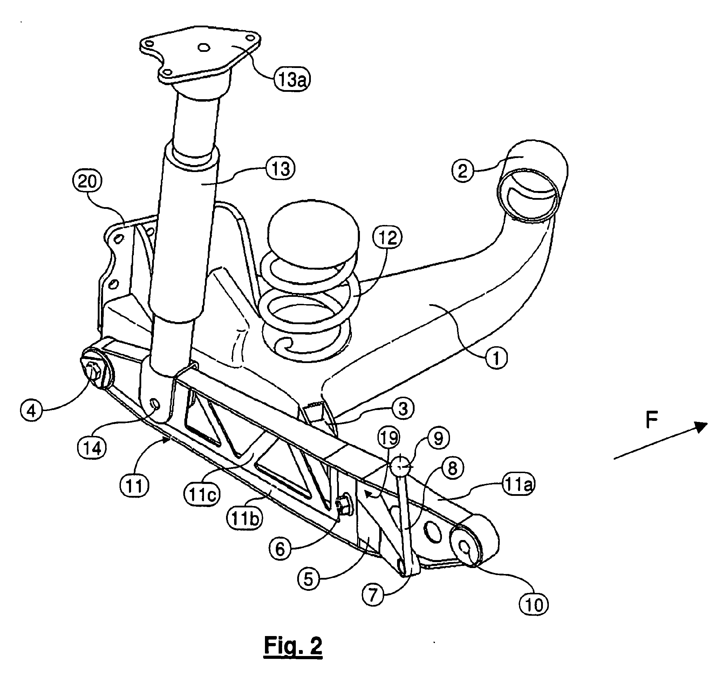

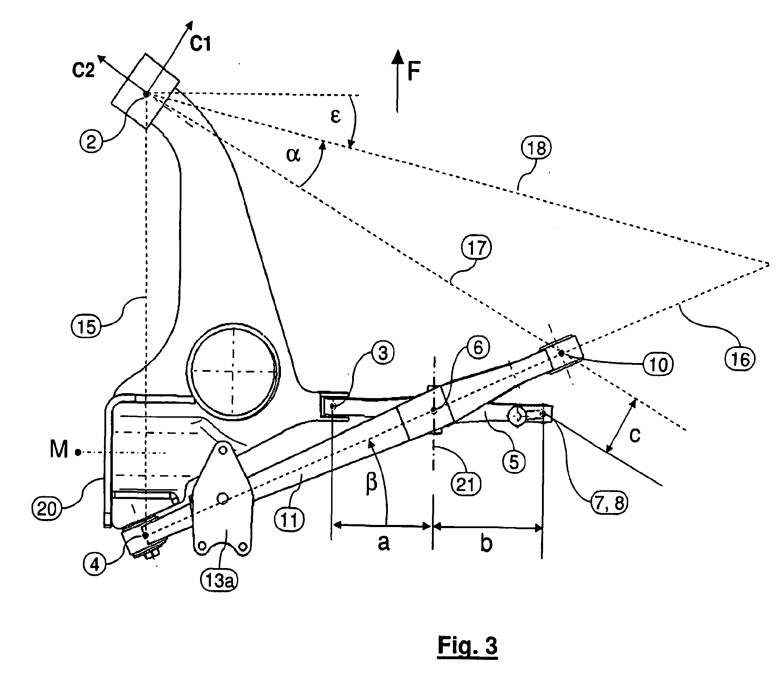

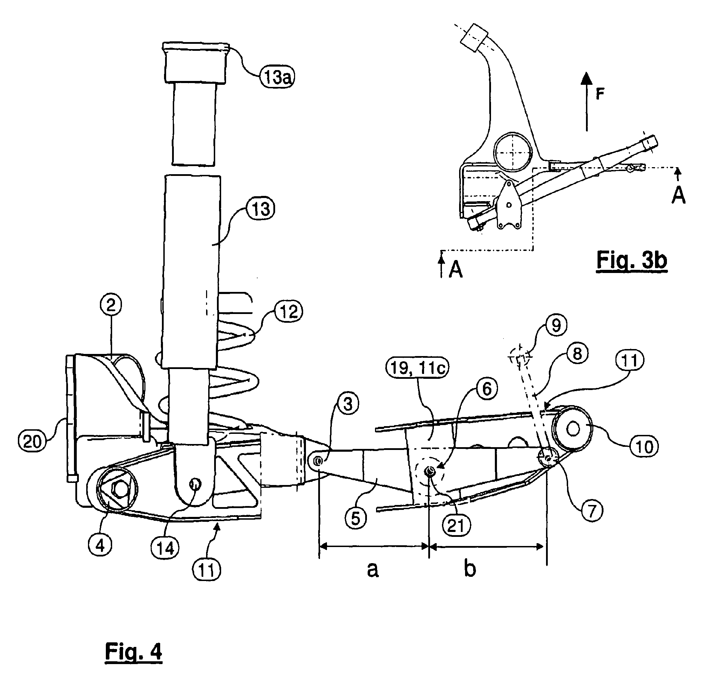

Im weiteren wird die Erfindung anhand eines Ausführungsbeispiels beschrieben, wobei die beigefügte **Figur 1** eine erste isometrische Ansicht einer erfindungsgemäßen Einzelradaufhängung in Form einer Ansicht von schräg außen vorne auf die Aufhängung des linken Hinterrads eines Personenkraftwagens zeigt. In **Figur 2** ist eine zweite isometrische Ansicht von schräg innen hinten dargestellt, während **Figur 3** die Draufsicht zeigt. In **Figur 4** schließlich ist der Schnitt A-A aus Figur 3b dargestellt, die der Figur 3 in verkleinerter Darstellung entspricht und den Verlauf des Schnittes A-A zeigt.

Ein grundsätzlich bekannter Radträger, an dem ein nicht dargestelltes Rad um seine Drehachse drehbar angebracht ist, trägt die Bezugsziffer 20. Einstückig an diesem Radträger 20 vorgesehen ist ein Längslenker 1, der ausgehend vom Radträger 20 im wesentlichen in Fahrzeug-Längsrichtung bzw. Fahrtrichtung F nach vorne ausgerichtet ist. Über ein am freien Ende dieses Längslenkers 1 vorgesehenes, nicht detailliert dargestelltes Längslenkerlager 2 ist dieser Längslenker 1 am ebenfalls nicht dargestellten Fahrzeugaufbau angelenkt, und zwar solchermaßen, dass der Radträger 20 in grundsätzlich bekannter Weise eine Einfederbewegung bzw. Ausfederbewegung gegenüber dem Fahrzeug-Aufbau ausführen kann, wobei eine als Schraubenfeder ausgebildete Tragfeder 12, über welche der Fzg.-Aufbau anteilig auf dem Längslenker 1 und somit letztlich auf dem Rad mit dieser Einzelradaufhängung abgestützt ist, komprimiert bzw. entspannt wird. Ferner ist das Längslenkerlager 2 in bekannter Weise derart gestaltet, dass das Rad unter Einwirkung von im Radaufstandspunkt auf der Fahrbahn angreifenden Seitenkräften eine Änderung der Spur erfahren kann. Hierfür ist (vgl. Fig.3) die vorrangig in Richtung einer Momentanachse 18, um welche der Radträger 20 bei der Einfederbewegung schwenkt - (hierauf wird später noch näher eingegangen) - orientierte Steifigkeit C2 des Längslenker-lagers 2 geringer als die in der Horizontalebene hierzu senkrechte und vorrangig in Fahrzeug-Längsrichtung bzw. Fahrtrichtung F orientierte Steifigkeit C1 dieses Längslenkerlagers 2.

In einem Punkt 4 ist über ein Gummilager oder dgl. ein Querlenker 11 am Radträger 20 bzw. am Längslenker 1 relativ nahe zum Rad gelenkig angebunden, der sich vorrangig in Fahrzeug-Querrichtung, teilweise jedoch auch in Fahrtrichtung F erstreckt, so dass dieser Querlenker 11 bzw. eine durch diesen in Form einer geradlinigen Verbindung der beiden Mittelpunkte der beiden Lager 4, 10 am Ende dieses Querlenkers 11 beschriebene Gerade, die die sog. Wirkungslinie 16 dieses Querlenkers 11 darstellt, um einen Winkel *β* gegenüber der Fzg.-Querrichtung in Fahrtrichtung F geneigt ist. Soeben bereits genannt wurde dabei das am dem Radträger 20 abgewandten Ende des Querlenkers 11 vorgesehene Lager 10 bzw. der zugehörige Lagerpunkt 10, über den bzw. das dieser erste Querlenker 11 am Fzg.-Aufbau derart gelenkig angebunden ist, dass der Radträger 20 die bereits erwähnte Einfederbewegung und Ausfederbewegung gegenüber dem Fahrzeugaufbau ausführen kann.

Weiterhin ist in einem Punkt 3 über eine sog. Abstützung, für die ebenfalls die Bezugsziffer 3 verwendet wird, ein weiterer sich vorrangig (und beim vorliegenden Ausführungsbeispiel praktisch exakt) in Fzg.-Querrichtung erstreckenden Lenker 5 am Längslenker 1 angebunden, der als Sturzhebel-Lenker 5 bezeichnet wird. Dieser Sturzhebel-Lenker 5 durchdringt den Querlenker 11 in einer in diesem vorgesehenen Durchbrechung 19, um mit seinem anderen Ende in einem Lagerpunkt 7 über eine Abstützung, die hier in Form einer sog. Pendelstütze 8 ausgebildet ist, am nicht dargestellten Fzg.-Aufbau abgestützt zu sein. Diese Pendelstütze 8 erstreckt sich zwischen dem Lagerpunkt 7 des Sturzhebel-Lenkers 5 und dem Fzg.-Aufbau im wesentlichen in Vertikalrichtung und somit senkrecht zur Fahrbahn und ist am Lagerpunkt 7 sowie am Fzg.-Aufbau gelenkig abgestützt, so dass diese Abstützung, für die ebenfalls die Bezugsziffer 8 verwendet wird, in der zur Fahrbahn senkrechten Vertikalrichtung steif ausgebildet ist, hingegen in der zur Fahrbahn parallelen Horizontalebene weich gestaltet ist.

Gleiches gilt im übrigen für die erstgenannte Abstützung 3 des Sturzhebel-Lenkers 5 im Punkt 3 am Längslenker 1: Auch diese Abstützung 3 ist in Vertikalrichtung steif und in der Horizontalebene demgegenüber wesentlich weicher ausgebildet, so dass auch in dieser Abstützung 3 - ebenso wie in der Abstützung 8 - im wesentlichen nur Vertikalkräfte übertragen werden können. Vorliegend ist die Abstützung 3 in Form eines entsprechend bzw. geeignet gestalteten Gummilagers ausgebildet, welches in unterschiedlichen Richtungen unterschiedliche Steifigkeiten aufweist, d.h. in Vertikalrichtung steif und in der Horizontalebene weich ist. Alternativ könnte jedoch die Abstützung 3 ebenfalls durch eine Pendelstütze oder dgl. gebildet sein. In diesem Zusammenhang sei ausdrücklich darauf hingewiesen, dass auch die im vorhergehenden Absatz erläuterte Abstützung 8 im Lagerpunkt 7 nicht zwangsweise in Form einer Pendelstütze (8) ausgebildet sein muss; vielmehr kann auch diese erläuterte Absützung 8 im Lagerpunkt 7 in Form eines geeignet gestalteten Gummilagers ausgebildet sein, d.h. in der zur Fahrbahn senkrechten Vertikalrichtung steif und in der zur Fahrbahn parallelen Horizontalebene weich.

Bislang nur beiläufig erwähnt wurde eine bzw. die Durchbrechung 19 im Querlenker 11, durch welche der Sturzhebel-Lenker 5, welcher im übrigen kürzer als der Querlenker 11 ist, hindurchgeführt ist. Dieses Hindurchführen des Sturzhebel-Lenkers 5 durch den Querlenker 11 bedeutet, dass sich diese beiden soeben genannten Lenker 5, 11 sozusagen physisch kreuzen, was vor der Beschreibung dieses Ausführungsbeispiels bereits ausführlicher erläutert wurde. In bzw. an dieser Durchbrechung 19 ist dabei der Sturzhebel-Lenker 5 in einer sog. Lagerung 6 gegenüber dem Querlenker 11 kippbar bzw. geringfügig verschwenkbar gelagert, und zwar um eine sog. Kippachse 21, die in Draufsicht (gemäß Fig.3) senkrecht zum Sturzhebel-Lenker 5 und somit in Fahrzeug-Längsrichtung verläuft. Gleichzeitig liegt diese Kippachse 21 vorliegend in einer Horizontalebene, so dass sie in der Darstellung nach Fig.4 senkrecht zur Zeichenebene den dortigen Punkt 6 bzw. die Lagerung 6 durchdringt. Es sei jedoch ausdrücklich darauf hingewiesen, dass die Kippachse 21 nicht zwingend exakt horizontal und in Fahrtrichtung F verlaufend ausgerichtet sein muss; vielmehr können die im weiteren beschriebenen Funktionen oder Eigenschaften einer erfindungsgemäßen Einzelradaufhängung auch dargestellt werden, wenn sich diese Kippachse 21 nur im wesentlichen horizontal und nur im wesentlichen in Fahrtrichtung erstreckt.

Bevor die Funktion dieser Einzelradaufhängung beschrieben wird, sei kurz auf die Gestaltung der Durchbrechung 19 sowie der Lagerung 6 im Querlenker 11 eingegangen. Wie ersichtlich ist der Querlenker 11 abschnittsweise nach Art eines Fachwerks ausgebildet, mit einem horizontalen sog. Deckband 11a und einem horizontalen sog. Bodenband 11b, zwischen denen Fachwerkstreben 11c vorgesehen sind. Zwischen zwei einander benachbarten und dabei vertikal ausgerichteten Fachwerkstreben 11 c, die weiterhin in Form von im wesentlichen parallel zum Sturzhebel-Lenker 5 verlaufenden Wänden ausgebildet und angeordnet sind, ist dieser Sturzhebel-Lenker 5 dann in einfacher Weise zwischen dem Deckband 11a und dem Bodenband 11b hindurchgeführt. Ferner kann zur Ausbildung der genannten Lagerung 6 in einfacher Weise ein Bolzen, der dann die Kippachse 21 bildet oder beschreibt, durch diese beiden die genannten Wände bildenden Fachwerkstreben 11c hindurch gesteckt sein. Dieser Bolzen durchdringt dan den Sturzhebel-Lenker 5 in einer bohrungsartigen Aufnahme.

Der Vollständigkeit halber sei noch auf einen in üblicher Weise wirkungsmäßig der bereits genannten Tragfeder 12 parallel geschalteten Dämpfer 13 hingewiesen, der in einem Punkt 14 am Querlenker 11 abgestützt und mit seinem gegenüberliegenden Ende über eine Platte 13a am Fahrzeug-Aufbau befestigt ist (nicht gezeigt). Im übrigen hat diese Anordnung des Dämpfers 13 auf dem Querlenker 11 den Vorteil, dass die Dämpfer-Kraft kein Stützmoment auf den Radträger 20 erzeugt, so dass sich die hierauf beruhende sog. elastische Sturzänderung des Rades bei Einfeder- und Ausfederbewegungen des Fzg.-Aufbaus in Grenzen hält.

Was nun die kinematische Funktionsweise einer erfindungsgemäßen Einzelradaufhängung betrifft, so ist diese derjenigen der eingangs genannten Zentrallenkerachse (vgl. bspw. die bereits genannte EP 0 052 663 B1) vergleichbar, wobei der Bauraumbedarf der vorliegenden Einzelradaufhängung dahingehend Vorteile aufweist, als dass ein bei der Zentrallenkerachse benötigter oberer Querlenker entfallen kann. Dies erlaubt es, den Karosserielängsträger des Fahrzeugs hinsichtlich Steifigkeit, Kosten und Gewicht günstiger zu gestalten und erhöht insbesondere die Raumfunktionalität des Fahrzeugs, indem nun (ohne oberen Querlenker) oberhalb der Radmitte zusätzlicher Bauraum zur Verfügung steht. Die Funktion des oberen Querlenkers einer Zentrallenkerachse wird bei vorliegender Einzelradaufhängung durch einen "Zusatzmechanismus" ersetzt, der durch den Sturzhebel-Lenker 5 mit seiner besonders gestalteten Abstützung gebildet ist.

Wie bereits erwähnt wurde ist dieser Sturzhebel-Lenker 5 mit seinen beiden Enden über eine in Vertikalrichtung steife und in der Horizontalebene weiche Abstützung abgestützt, und zwar einerseits am Längslenker 1 und anderseits am Fahrzeug.-Aufbau. Dabei liegt die Abstützung 3 des Sturzhebel-Lenkers 5 am Längslenker 1 in Fzg.-Querrichtung betrachtet weiter vom Rad beabstandet als die Abstützung oder Anlenkung des Querlenkers 11 am Radträger 20 oder Längslenker 1. Ferner kreuzt Sturzhebel-Lenker 5 - wie ebenfalls bereits erwähnt wurde - "physisch" den Querlenker 11 und ist mit diesem in einer Lagerung 6 verschwenkbar verbunden, wobei diese beiden Lenker 5, 11 in der Draufsicht gemäß Fig.3 den Buchstaben X darstellen. Das dem Längslenker 1 gegenüber liegende Ende des Sturzhebel-Lenker 5 bzw. dessen Lagerpunkt 7 ist über eine Pendelstütze 8 letztlich in einem Punkt 9, welcher dem anderen, dem Sturzhebel-Lenker 5 abgewandten Ende der Pendelstütze 8 entspricht, am Fahrzeug-Aufbau abgestützt. Dieser soweit gebildete "Zusatzmechanismus" bewirkt nun, dass sich der Längslenker 1 bei einer Einfederbewegung des Radträgers 20 gegenüber dem Fzg.-Aufbau nicht nur um eine Schwenkachse 17 (vgl. Fig.3) dreht, die durch die Lagerdrehpunkte des Längslenker-Lagers 2 und des fahrzeugaufbau-seitigen Lagerpunktes 10 des Querlenkers 11gebildet wird, sondern zusätzlich um eine sog. Sturz-Achse 15 verdreht wird, die durch die Lagerdrehpunkte des Längslenkerlagers 2 und des Lager-Punktes 4 des Querlenkers 11 am Radträger 20 bzw. Längslenker 1 gebildet wird.

Dabei erfolgt das soeben genannte "zusätzliche Verdrehen" des Längslenkers 1 um die Sturz-Achse 15, weil der Sturzhebel-Lenker 5 den Längslenker 1 während einer Einfederbewegung über die Abstützung 3 im wesentlichen in Vertikalrichtung geringfügig nach oben drückt. Indem die Abstützung 8 des Sturzhebel-Lenkers 5 über den Lagerpunkt 7 in einem gewissen Abstand c zur Schwenkachse 17 liegt, wird nämlich der Sturzhebel-Lenker 5 bei einer solchen Einfederbewegung über die Abstützung 8 in der Lagerung 6 relativ zum Querlenker 11 um die Kippachse 21 geringfügig gekippt. Als Folge des in Verbindung mit einer Einfeder-Bewegung des Radträgers 20 gegenüber dem Fahrzeugaufbau erfolgenden Verdrehens des Längslenkers 1 sowohl um die Schwenk-Achse 17 als auch "zusätzlich" um die Sturz-Achse 15 wird der Längslenker 1 mit dem Radträger 20 somit bei einer Einfeder- oder Ausfeder-Bewegung um die resultierende Momentanachse 18 verschwenkt, die um einen Winkel *∈* gegenüber der Fzg.-Querrichtung geneigt verläuft.

Mit dem genannten zusätzlichen Verdrehen" des Längslenkers 1 und somit auch des damit fest verbunden Radträgers 20 um die Sturz-Achse 15 kann nun eine ohne einen solchen besagten Zusatzmechanismus erfolgende starke Zunahme des Rad-Sturzes in Richtung negativer Sturz bei einer Einfederbewegung vermieden bzw. kompensiert werden, da dieses "zusätzliche Verdrehen" um die Sturz-Achse 15 das Rad in Richtung positiven Sturz verlagert. Wie sehr oder wie weit der Radträger 20 bzw. Längslenker 1 bei einer Einfederbewegung um die Achse 15 verschwenkt wird, hängt im Wesentlichen von den durch die Strecken a, b und c (vgl. Fig.3) bestimmten Hebelverhältnissen ab. Dabei stellt die bereits genannte Strecke c den Abstand zwischen dem dem Längslenker 1 abgewandten Lagerpunkt 7 des Sturzhebel-Lenkers 5 und der durch die Lager-Punkte 2 und 10 des Längslenkers 1 bzw. des Querlenkers 11 definierten Schwenk-Achse 17 dar. Die Strecken a und b hingegen sind die beiden Hebelarme des Sturzhebel-Lenkers 5 bezüglich dessen Kippachse 21 (vgl. Fig.3, 4).

Für den Fall, dass der genannte Abstand c zwischen dem Lager-Punkt 7 des Sturzhebel-Lenkers 5 und der Schwenkachse 17 gleich Null ist, hat der besagte "Zusatzmechanismus" keine merkliche Wirkung, denn die Pendelstütze 8 des Sturzhebel-Lenkers 5 würde bei einer Einfederbewegung bezüglich des Querlenkers 11 keine nennenswerte Relativbewegung in Vertikalrichtung ausführen. Damit würde sich der Längslenker 1 lediglich um die Schwenkachse 17 drehen, so wie dies bei einer üblichen Schräglenkerachse der Fall ist. Für diesen Fall, dass der Abstand c den Wert Null hätte, läge vorliegend also praktisch eine Schräglenkerachse vor, jedoch wäre deren sog. Pfeilungswinkel (= Summe der Winkel *∈* und *α* in Fig.3), der insbesondere die sog. Sturzkurve des Rades beim Einfedern sowie das Rollzentrum bestimmt, zu groß, d.h. das Rad würde beim Einfedern zu viel negativen Sturz machen und das Rollzentrum läge zu hoch. Der hier vorgeschlagene besagte "Zusatzmechanismus" gleicht nun diesen Missstand dadurch aus, das bei einer Einfederbewegung der Längslenker 1 um die bereits genannte Momentanachse 18 verdreht wird, die gegenüber der Schwenkachse 17 um den Winkel *α* verdreht mehr in Fzg.Querrichtung ebenfalls durch das Längslenkerlager 2 verläuft. Dabei ist die Größe des Winkels *α* von der Größe der genannten Strecken a, b und c und von deren Größenverhältnis zueinander abhängig. Insbesondere ist es möglich, die Momentanachse 18 vergleichbar wie bei einer eingangs genannten Zentrallenkerachse zu positionieren. Vorzugsweise verläuft diese Momentanachse 18 durch den Längslenker-Anlenkpunkt 2 am Fahrzeugaufbau in Draufsicht gegenüber der Fahrzeug-Querrichtung um einen Winkel in der Größenordnung von 5° bis 20° in Fahrtrichtung nach hinten geneigt. Selbstverständlich können bei geeigneter Auswahl weiterer Parameter, so insbesondere der Länge des Querlenkers 11 auch die weiteren kinematischen Eigenschaften einer erfindungsgemäßen Einzelradaufhängung, wie Spur- und Sturzkurve, Rollzentrumshöhe- und Änderungsgeschwindigkeit ebenso günstig wie bei einer Zentrallenkerachse eingestellt werden.

Auch das elastokinematische Verhalten einer erfindungsgemäßen Einzelradaufhängung bei Kurvenfahrt und beim Bremsen ist mit dem einer Zentrallenkerachse vergleichbar. Bei Seitenkräften stützt sich der Radträger 20 am Querlenker 11 ab und dreht sich um eine im wesentlichen vertikal verlaufende Achse, welche durch den Lager-Punkt 4 des Querlenkers 11 verläuft, so dass das kurvenäußere Rad in Richtung Vorspur schwenken kann In diesem Sinne ist der Querlenker 11 in der Draufsicht (gemäß Fig.3) so angeordnet, dass sich der Lager-Punkt 4 in Fahrtrichtung F betrachtet hinter dem Radmittelpunkt M befindet. Die bereits beschriebenen Steifigkeitsverhältnisse C1, C2 des Längslenkerlagers 2 spielen dabei ebenfalls eine wesentliche Rolle, ebenso wie die bereits beschriebene Weichheit der Abstützung 3 in der Horizontalebene. Sind diese Voraussetzungen erfüllt, so kann sich der Längslenker 1 auch beim Bremsen wie bei einer Zentrallenkerachse bewegen: Dabei wird der Längslenker 1 gegen Fahrtrichtung F nach hinten gezogen, was aufgrund der Steifigkeitsverhältnisse im Längslenkerlager 2 wie eine Zwangsführung wirkt, welche den Längslenker 1 in Vorspur schwenken lässt. Im übrigen sei darauf hingewiesen, dass durchaus eine Vielzahl von Details abweichend von obigen Ausführungen gestaltet sein kann, ohne den Inhalt der Patentansprüche zu verlassen.

## Patentansprüche

1. Fahrzeug-Einzelradaufhängung insbesondere für ein Hinterrad eines Personenkraftwagens, mit einem Radträger (20), mit dem ein sich im wesentlichen in Fahrzeug-Längsrichtung erstreckender Längslenker (1), dessen freies Ende über ein Längslenkerlager (2), welches unter Einwirkung von Seitenkräften auf das Rad eine Spuränderung erlaubt, letztlich am Fahrzeug-Aufbau angelenkt ist, fest verbunden ist, sowie mit zwei sich vorrangig in Fahrzeug-Querrichtung erstreckenden Lenkern (5, 11), die gelenkig einerseits mit dem Radträger (20) oder Längslenker (1) und andererseits direkt oder indirekt mit dem Fahrzeug-Aufbau verbunden sind,
**dadurch gekennzeichnet, dass** einer der sich vorrangig in Fahrzeug-Querrichtung erstreckenden Lenker (11) als Querlenker (11) fungiert und auch teilweise in Fahrtrichtung ausgerichtet nahe des Rades am Radträger (20) oder Längslenker (1) angelenkt ist und zwischen seinen beiden Enden eine Lagerung (6) für den anderen vorrangig in Fahrzeug-Querrichtung ausgerichteten und als sog. Sturzhebel-Lenker (5) fungierenden Lenker (5) aufweist, der den Querlenker (11) in Draufsicht, d.h. in Vertikalrichtung betrachtet kreuzt, wobei diese genannte Lagerung (6) eine Kippbewegung des Sturzhebel-Lenkers (5) um eine sich im wesentlichen horizontal und im wesentlichen in Fahrtrichtung erstreckende Kippachse (21) ermöglicht und der Sturzhebel-Lenker (5) an seinen beiden Enden über eine in Vertikalrichtung steife und in der Horizontalebene weiche Abstützung (3, 8) einerseits in Querrichtung betrachtet weiter als der Querlenker (11) vom Rad beabstandet am Längslenker (1) und andererseits am Fahrzeug-Aufbau abgestützt ist, wobei der fahrzeugaufbau-seitige Lagerpunkt (7) des Sturzhebel-Lenkers (5) in Draufsicht von der durch die fahrzeugaufbau-seitigen Lagerpunkte (2, 10) des Längslenkers (1) und des Querlenkers (11) beschriebenen Schwenkachse (17) beabstandet ist.

2. Fahrzeug-Einzelradaufhängung nach Anspruch 1, **dadurch gekennzeichnet, dass** der Sturzhebel-Lenker (5) den Querlenker (11) durch geeignete Gestaltung zumindest eines dieser beiden Lenker (5, 11) physisch kreuzt.

3. Fahrzeug-Einzelradaufhängung nach Anspruch 2, **dadurch gekennzeichnet, dass** der Querlenker (11) eine Durchbrechung (19) aufweist, durch welche der Sturzhebel-Lenker (5) hindurchgeführt ist.

4. Fahrzeug-Einzelradaufhängung nach einem der vorangegangenen Ansprüche, **dadurch gekennzeichnet, dass** die in Vertikalrichtung steife und in der Horizontalebene weiche Abstützung (8) des Sturzhebel-Lenkers (5) zumindest gegenüber dem Fahrzeugaufbau in Form einer Pendelstütze (8) ausgeführt ist.

5. Fahrzeug-Einzelradaufhängung nach einem der vorangegangenen Ansprüche, **dadurch gekennzeichnet, dass** der Abstand (c) des fahrzeugaufbau-seitigen Lagerpunktes (7) des Sturzhebel-Lenkers (5) zur Schwenkachse (17) sowie das Verhältnis der Hebelarme (a, b) am Sturzhebel-Lenker (5) bezüglich dessen Lagerung (6) am Querlenker (11) derart bemessen ist, dass der Längslenker (1) bei Einfeder- und Ausfederbewegungen gegenüber dem Fahrzeugaufbau um eine Momentanachse (18) schwenkt, die durch den Längslenkerlager-Punkt (2) am Fahrzeugaufbau in Draufsicht gegenüber der Fahrzeug-Querrichtung um einen Winkel (*∈*) in der Größenordnung von 5° bis 20° in Fahrtrichtung nach hinten geneigt verläuft.

6. Fahrzeug-Einzelradaufhängung nach einem der vorangegangenen Ansprüche, **dadurch gekennzeichnet, dass** die in Vertikalrichtung steife und in der Horizontalebene weiche Abstützung (3) des Sturzhebel-Lenkers (5) am Längslenker (1) in Form eines geeignet gestalteten Gummilagers ausgeführt ist.

## Claims

1. An independent vehicle suspension, more especially for a rear wheel of a passenger car, with a wheel carrier (20), to which a longitudinal control arm (1), which extends substantially in the longitudinal direction of the vehicle and the free end of which is ultimately articulated to the vehicle bodywork by means of a longitudinal control arm bearing (2), which allows a change in toe under the effect of lateral forces on the wheel, is rigidly connected, and comprising two control arms (5, 11) extending primarily in the transverse direction of the vehicle, which are, on the one hand, connected in an articulated manner to the wheel carrier (20) or longitudinal control arm (1) and, on the other hand, directly or indirectly to the vehicle bodywork, **characterised in that** one of the control arms (11) extending primarily in the transverse direction of the vehicle acts as a transverse control arm (11) and, also partly oriented in the direction of travel, is articulated close to the wheel on the wheel carrier (20) or longitudinal control arm (1) and, between its two ends, has a bearing (6) for the other control arm (5) oriented primarily in the transverse direction of the vehicle and acting as a so-called drop control arm (5), which crosses the transverse control arm (11) in plan view, i.e. viewed in the vertical direction, wherein this bearing (6) mentioned allows a tipping movement of the drop control arm (5) about a tip axis (21) extending substantially horizontally and substantially in the direction of travel, and the drop control arm (5) at its two ends is supported by means of a support (3, 8), which is rigid in the vertical direction and soft in the horizontal plane, on the one hand, viewed in the transverse direction, spaced apart further than the transverse control arm (11) from the wheel, on the longitudinal control arm (1) and, on the other hand, on the vehicle bodywork, wherein the bearing point (7), on the vehicle bodywork side, of the drop control arm (5), in plan view, is spaced apart from the pivot axis (17) described by the bearing points (2, 10), on the vehicle bodywork side, of the longitudinal control arm (1) and of the transverse control arm (11).

2. An independent vehicle suspension according to claim 1, **characterised in that** the drop control arm (5) physically crosses the transverse control arm (11) by a suitable configuration of at least one of these two control arms (5, 11).

3. An independent vehicle suspension according to claim 2, **characterised in that** the transverse control arm (11) has an opening (19), through which the drop control arm (5) is guided.

4. An independent vehicle suspension according to any one of the preceding claims, **characterised in that** the support (8), which is rigid in the vertical direction and soft in the horizontal plane, of the drop control arm (5) is configured in the form of a pendulum support (8) at least relative to the vehicle bodywork.

5. An independent vehicle suspension according to any one of the preceding claims, **characterised in that** the spacing (c) of the bearing point (7) on the vehicle bodywork side, of the drop control arm (5) from the pivot axis (17) and the ratio of the lever arms (a, b) on the drop control arm (5) with respect to its bearing (6) on the transverse control arm (11) is dimensioned such that the longitudinal control arm (1) pivots about a torque axis (18) during deflection and rebound movements relative to the vehicle bodywork, said torque axis running through the longitudinal control arm bearing point (2) on the vehicle bodywork, in plan view, inclined to the rear by an angle (*∈*) in the order of magnitude of 5° to 20° in the direction of travel, relative to the transverse direction of the vehicle.

6. An independent vehicle suspension according to any one of the preceding claims, **characterised in that** the support (3), which is rigid in the vertical direction and soft in the horizontal plane, of the drop control arm (5) on the longitudinal control arm (1) is configured in the form of a suitably configured rubber bearing.

## Revendications

1. °) Suspension de roue individuelle pour véhicule de tourisme pour une roue arrière d'un véhicule de tourisme comprenant un support de roue (20), auquel est relié solidairement un bras longitudinal (1) s'étendant principalement dans la direction longitudinale du véhicule, dont l'extrémité libre est articulée finalement à la carrosserie du véhicule par l'intermédiaire d'un palier de bras longitudinal (2) qui autorise une modification de l'écartement sous l'action de forces latérales sur la roue, comprenant également deux bras (5, 11) s'étendant principalement dans la direction transversale du véhicule qui sont reliés de manière articulée d'un côté avec le support de roue (20) ou le bras longitudinal (1) et de l'autre côté directement ou indirectement à la carrosserie du véhicule,
**caractérisée en ce que**
- l'un des bras (11) qui s'étend principalement dans la direction transversale du véhicule fait fonction de bras transversal (11) et il est également partiellement dirigé dans le sens de déplacement du véhicule et il est articulé au support de roue (20) en étant partiellement également dirigé dans la direction de circulation à proximité de la roue ou du bras longitudinal (1) et présente, entre ses extrémités, un palier (6) pour l'autre bras (5) principalement dirigé dans la direction transversale du véhicule et ayant fonction de bras de levier de support (5) qui croise le bras transversal (11) en vue de dessus, c'est-à-dire qui le croise observé dans la direction verticale,
- ce palier (6) permet un mouvement d'inclinaison du bras de levier de support (5) autour de l'axe d'inclinaison (21) s'étendant essentiellement horizontalement et essentiellement dans la direction de circulation et le bras de levier de support (5) est appuyé par ses deux extrémités par un appui (3, 8), rigide dans la direction verticale et souple dans le plan horizontal, d'une part sur le bras longitudinal (1) plus loin de la roue que le bras transversal (11) vu dans la direction transversale et d'autre part appuyé contre la carrosserie du véhicule,
- et en vue de dessus le point de palier (7) du côté de la carrosserie du bras de levier de support (5), en vue de dessus, étant écarté des points d'appui (2, 10) du bras longitudinal (1) côté carrosserie et de l'axe de pivotement (17) décrit par le bras transversal (11).

2. °) Suspension de roue selon la revendication 1,
**caractérisée en ce que**
le bras de levier de support (5) croise physiquement le bras transversal (11) par une forme appropriée, donnée à au moins l'un de ses deux bras (5, 11).

3. °) Suspension de roue selon la revendication 2,
**caractérisée en ce que**
le bras transversal (11) présente des découpures (19) à travers laquelle passe le bras de levier de support (5).

4. °) Suspension de roue selon l'une des revendications précédentes,
**caractérisée en ce que**
l'appui (8) rigide dans la direction verticale et souple dans le plan horizontal du bras de levier de support (5) sont réalisés au moins vis-à-vis de la carrosserie sous la forme d'un support oscillant (8).

5. °) Suspension de roue selon l'une des revendications précédentes,
**caractérisée en ce que**
la distance (c) entre le point de palier (7) du côté de la carrosserie du véhicule du bras de levier de support (5) par rapport à l'axe de pivotement (17) ainsi que le rapport des bras de levier (a, b) du bras de levier de support (5) par rapport à son palier (6) relié au bras transversal (11) sont dimensionnés de sorte que le bras longitudinal (1), lors de mouvement de compression et de détente du ressort, pivote autour d'un axe instantané (18) par rapport à la carrosserie, cet axe passant par le point de palier de bras longitudinal (2) à la carrosserie, en vue de dessus, s'étend de manière inclinée vers l'arrière par rapport à la direction transversale du véhicule d'un angle (ε) d'un ordre de grandeur de 5 à 20°.

6. °) Suspension de roue selon l'une des précédentes revendications,
**caractérisée en ce que**
l'appui rigide dans la direction verticale et l'appui souple (3) dans le plan horizontal du bras de levier de support (5) au bras longitudinal sont réalisés sous la forme d'un palier en caoutchouc de forme appropriée.
